# EUROPEAN PATENT APPLICATION

(11) **EP 1 220 129 A2**
(43) Date of publication of application: **03.07.2002**
(21) Application number: 01307111.3
(22) Date of filing: 21.08.2001
(51) Int. Cl.: G06F 17/60

(54) **Order receiving and ordering system**

(30) Priority: 28.12.2000 JP 2000403375
(71) Applicant: SANYO ELECTRIC CO. LTD, Moriguchi-shi, Osaka-fu (JP)
(72) Inventor: Morishima, Masayuki, Ashikaga-shi, Tochigi-ken (JP)
(74) Representative: Style, Kelda Camilla Karen

(57) **Abstract**

An order receiving and order system is provided in which, even if a number of products increases, a user can easily search for a desired product without an operational load on the user increasing. A control section of a main server displays category images of category numbers 1, 2, ... 6 for six seconds on a category selection screen of a communication terminal. Then, category images of category numbers 3, 4, ... 8 are displayed for one second on the category selection screen. From thereon, category images are displayed for one second while shifting category numbers two-by-two.

## Description

### BACKGROUND OF THE INVENTION

### Field of the Invention

The present invention relates to an order receiving device and receiving method, an order system and method, and an ordering device, and in particular, to an order receiving device and receiving method, an order system and method, and an ordering device which are suitable for internet shopping.

### Description of the Related Art

In recent years, internet shopping, by which various types of products are purchased by using sites on the internet, has come to be generally used. It can be surmised that the types of products which will be handled by internet shopping will increase in the future.

When the number of types of products which are handled becomes large, all product images cannot be displayed on a single screen. In such a case, a predetermined number of product images are displayed on a single screen, and by scrolling by using a scroll bar, other product images are viewed.

Further, when a user opens a screen in which products are displayed, it is not always the case that the product desired by the user is displayed at the instant that the screen is opened. Accordingly, the user repeats operations of viewing the predetermined number of products for several seconds, and when there is no product which is desired, operating the scroll bar, and viewing the newly displayed plural products for several seconds.

In a case in which the user knows in advance the name of the desired product, the user can search for the product by using an internet shopping search function. However, in a case in which the user does not know specific information regarding the desired product, he/she must operate the scroll bar as described above, and there is the problem that the load of operation on the user is large. Further, as the number of products increases, the operational load on the user tends to increase.

This problem of operating the scroll bar is a serious problem for elderly persons and the like who are not used to terminal devices used to access the internet such as personal computers, cellular phones, and the like, and is one cause of limiting the increase in demand for internet shopping.

### SUMMARY OF THE INVENTION

The present invention proposes a solution to the above-described problems, and an object of the present invention is to provide an order receiving device and receiving method, an order system and method, and an ordering device, in which a desired product (desired products) ,which includes all items that can be traded on the network, can be searched for easily without an increase in the operational load on the user even if the number of products increases.

In order to achieve the above object, an order receiving device of the present invention for receiving orders of at least one of selected products by a client from at least two of images on the display of a client machine comprises : a memory which stores a plurality of product images to be transmitted at least one of a plurality of client machines via the network, and control data which, at a time when at least two of the plurality of product images are displayed on said client machine, automatically repeats automatic deleting of a predetermined number of product images on said client machine, and displaying of new product images of a predetermined number equal to the number of deleted product images; a transmitter which transmits the product images and the control data stored in the memory; and an order receiver which receives orders for products corresponding to the product images.

An order receiving method of the present invention for receiving orders of at least one of selected products by a client from at least two of images on the display of a client machine comprises the steps of : transmitting a plurality of product images to be transmitted to at least one of a plurality of client machines via the network, and control data which, at a time when at least two of the plurality of product images are displayed on said client machine, automatically repeats automatic deleting of a predetermined number of product images on said client machine, and displaying of new product images of a predetermined number equal to the number of deleted product images; and receiving orders for products corresponding to the product images.

In accordance with the above-described order receiving device and order receiving method, at the transmission destination of the product images and the control data, when two or more product images are displayed, processes of deleting of a predetermined number of product images, and displaying of new product images of a predetermined number equal to the number of deleted product images, are repeated. Here, the product image is not limited to an image of a product, and may include character (e.g., letter) information or symbols or the like for explaining the product. Namely, the product image does not have to include only image data, and may also include text data or the like. In this way, even if there is an extremely large number of product images, the user can easily visually confirm the respective product images without carrying out any operation, and as a result, can easily order a desired product from among a large number of products.

In the order receiving device of the present invention, the memory may store control data which, at a time when at least two product images are displayed so as to be aligned in a predetermined direction, automatically repeats deleting of a predetermined number of product images at one end in the predetermined direction, and shifting, in a direction of deletion, and displaying of remaining product images by a number equal to the number of deleted product images, and displaying of new product images of the predetermined number at the other end in the predetermined direction.

In the order receiving method of the present invention, in the step of transmitting, control data may be transmitted which, at a time when at least two product images are displayed so as to be aligned in a predetermined direction, automatically repeats deleting of a predetermined number of product images at one end in the predetermined direction, and shifting, in a direction of deletion, and displaying of remaining product images by a number equal to the number of deleted product images, and displaying of new product images of the predetermined number at the other end in the predetermined direction.

In accordance with the above-described order receiving device and order receiving method, at the transmission destination of the product images and the control data, when two or more product images are displayed so as to be aligned in a predetermined direction, the processes of deleting a predetermined number of product images at one end in the predetermined direction, and shifting, in the direction of deletion, and displaying the remaining product images by a number equal to the number of deleted product images, and displaying new product images of the predetermined number at the other end in the predetermined direction, are repeated. Namely, even if the user does not carry out any operation, the product images move in the predetermined direction and new product images are successively displayed. Thus, even if there is an extremely large number of product images, the user can order a product without scrolling. Note that, in a case in which two or more product images are aligned in a predetermined direction, the product images do not have to be aligned in one row, and may be aligned in two or more rows.

The order receiving device of the present invention may further comprise a category information receiver which receives category information which classifies products, and the transmitter may transmit product images belonging to category information received at the category information receiver, and control data for displaying the product images.

The order receiving method of the present invention may further comprise the step of: receiving category information which classifies products, and in the step of transmitting, product images belonging to category information received in the step of receiving category information, and control data for displaying the product images may be transmitted.

In accordance with the above-described order receiving device and order receiving method, category information, which classifies the products, is received, and product images belonging to the received category information and control data for displaying those product images are transmitted. In this way, a large number of product images can be narrowed down to desired product images, and as a result, a desired product can be order easily and quickly.

An order system of the present invention comprises: (A) an order receiving device for receiving orders of at least one of selected products by a client from at least two of images on the display of a client machine including: (i) a memory which stores a plurality of product images to be transmitted to at least one of a plurality of client machines via the network, and control data which, at a time when at least two of the plurality of product images are displayed on said client machine, repeats automatic deleting of a predetermined number of product images on said client machine, and displaying of new product images of a predetermined number equal to the number of deleted product images; (ii) a transmitter which transmits the product images and the control data stored in the memory; and (iii) an order receiver which receives orders for products corresponding to the product images; and (B) a plurality of terminal devices, each terminal device including: (i) a display which displays product images on the basis of data which the order receiving device transmits; (ii) a selector for selecting any of the product images displayed on the display; and (iii) an orderer for ordering, from the order receiving device, a product corresponding to a product image selected at the selector.

An ordering method of the present invention for ordering at least one of selected products by a client from at least two of images on the display of a client machine comprises the steps of: transmitting a plurality of product images to be transmitted to at least one of a plurality of client machines via the network, and control data which, at a time when at least two of the plurality of product images are displayed on said client machine, repeats automatic deleting of a predetermined number of product images on said client machine, and displaying of new product images of a predetermined number equal to the number of deleted product images; displaying product images on the basis of the product images and the control data transmitted by the step of transmitting; selecting any of the product images displayed in the step of displaying; ordering a product corresponding to the product image selected in the step of selecting; and receiving the product ordered in the step of ordering.

In accordance with the above-described order system and ordering method of the present invention, at the display of the terminal device, when two or more product images are displayed, the processes of deleting of a predetermined number of product images, and displaying new product images of a predetermined number equal to the number of deleted product images, are repeated. Here, the product image is not limited to an image of a product, and may include character information or symbols or the like for explaining the product. Namely, the product image does not have to include only image data, and may also include text data or the like. In this way, even if there is an extremely large number of product images, the user can easily visually confirm the respective product images without carrying out any operation at the terminal device. Further, the user can easily order a desired product from the order receiver via the orderer of the terminal device.

In the order system of the present invention, the memory of the order receiving device may store control data which, at a time when at least two product images are displayed so as to be aligned in a predetermined direction, automatically repeats deleting of a predetermined number of product images at one end in the predetermined direction, and shifting, in a direction of deletion, and displaying of remaining product images by a number equal to the number of deleted product images, and displaying of new product images of the predetermined number at the other end in the predetermined direction.

In the ordering method of the present invention, the step of transmitting may transmit control data which, at a time when at least two product images are displayed so as to be aligned in a predetermined direction, automatically repeats deleting of a predetermined number of product images at one end in the predetermined direction, and shifting, in a direction of deletion, and displaying of remaining product images by a number equal to the number of deleted product images, and displaying of new product images of the predetermined number at the other end in the predetermined direction.

In accordance with the above-described order system and ordering method, at the display of the terminal device, when two or more product images are displayed so as to be aligned in a predetermined direction, the processes of deleting a predetermined number of product images at one end in the predetermined direction, and shifting, in the direction of deletion, and displaying the remaining product images by a number equal to the number of deleted product images, and displaying new product images of the predetermined number at the other end in the predetermined direction, are repeated. Namely, even if the user does not carry out any operation, the product images move in the predetermined direction on the display and new product images are successively displayed. Thus, even if there is an extremely large number of product images, the user can easily order a product without scrolling. Note that, in a case in which two or more product images are aligned in a predetermined direction, the product images do not have to be aligned in one row, and may be aligned in two or more rows.

In the order system of the present invention, each terminal device may further include a category selector which selects a category which classifies products, and a category information transmitter which transmits category information expressing the category selected at the category selector, and the order receiving device may further include a category information receiver which receives the category information, and the transmitter may transmit, to the terminal device, product images belonging to the category information received by the category information receiver, and control data for displaying the product images.

The ordering method of the present invention may further comprise the steps of: selecting a category which classifies products; transmitting category information expressing the category selected in the step of selecting category; and receiving the category information transmitted in the step of transmitting category information, and the step of transmitting may transmit product images belonging to the category information received in the step of receiving category information, and control data for displaying the product images.

In accordance with the above-described order system and ordering method, the terminal device can transmit category information, which expresses the category which the user has selected via the category selector, to the order receiving device. On the other hand, the order receiving device transmits to the terminal device the product images belonging to the received category information, and control data for displaying these product images. In this way, only the product images of the category which the user has selected are displayed on the display of the terminal device. Accordingly, the user can narrow down a large number of product images to desired product images, and as a result, the user can easily and quickly order a desired product.

An ordering device of the present invention for ordering at least one of selected products by a client from at least two of images on the display of a client machine comprises: a memory which stores a plurality of product images to be transmitted to at least one of a plurality of client machines via the network, and control data which, at a time when at least two of the plurality of product images are displayed on said client machine, automatically repeats automatic deleting of a predetermined number of product images on said client machine, and displaying of new product images of a predetermined number equal to the number of deleted product images; a reader which reads the product images and control data stored in the memory; a display which displays the product images on the basis of the product images and the control data read by the reader; and an orderer which orders products corresponding to the product images displayed on the display.

An ordering method of the present invention for ordering at least one of selected products by a client from at least two of images on the display of a client machine comprises the steps of: reading a plurality of product images to be transmitted to at least one of a plurality of client machines via the network, and control data which, at a time when at least two of the plurality of product images are displayed on said client machine, automatically repeats automatic deleting of a predetermined number of product images on said client machine, and displaying of new product images of a predetermined number equal to the number of deleted product images; displaying the product images on the basis of the product images and the control data read in the step of reading; and ordering products corresponding to the product images displayed in the step of displaying.

In the ordering device and ordering method of the present invention, at the display, when two or more product images are displayed, the processes of deleting of a predetermined number of product images, and displaying of new product images of a predetermined number equal to the number of deleted product images, are repeated. Here, the product image is not limited to an image of a product, and may include character information or symbols or the like for explaining the product. Namely, the product image does not have to include only image data, and may also include text data or the like. In this way, even if there is an extremely large number of product images, the user can easily visually confirm the respective product images without carrying out any operation, and as a result, can easily order a desired product from among a large number of products.

In the ordering device of the present invention, the memory may store control data which, at a time when at least two product images are displayed so as to be aligned in a predetermined direction, automatically repeats deleting of a predetermined number of product images at one end in the predetermined direction, and shifting, in a direction of deletion, and displaying of remaining product images by a number equal to the number of deleted product images, and displaying of new product images of the predetermined number at the other end in the predetermined direction.

In the ordering method of the present invention, the step of reading may read control data which, at a time when at least two product images are displayed so as to be aligned in a predetermined direction, automatically repeats deleting of a predetermined number of product images at one end in the predetermined direction, and shifting, in a direction of deletion, and displaying of remaining product images by a number equal to the number of deleted product images, and displaying of new product images of the predetermined number at the other end in the predetermined direction.

In the above-described ordering device and ordering method, at the display, when two or more product images are displayed so as to be aligned in a predetermined direction, processes of deleting a predetermined number of product images at one end in the predetermined direction, and shifting, in the direction of deletion, and displaying the remaining product images by a number equal to the number of deleted product images, and displaying new product images of the predetermined number at the other end in the predetermined direction, are automatically repeated. In this way, even if the user does not carry out any operation, the product images move in the predetermined direction on the display of the terminal device and new product images are successively displayed. Thus, even if there is an extremely large number of product images, the user can order a product without scrolling. Note that, in a case in which two or more product images are aligned in a predetermined direction, the product images do not have to be aligned in one row, and may be aligned in two or more rows.

The ordering device of the present invention may further comprise a category selector which selects a category which classifies products, and the reader may read product images belonging to a category selected by the category selector, and control data for displaying the product images.

The ordering method of the present invention may further comprise the step of: selecting a category which classifies products, and the step of reading may read product images belonging to a category selected in the step of selecting category, and control data for displaying the product images.

In accordance with the above-described ordering device and ordering method, the user can select a desired category by the category selector. Then, the product images belonging to the selected category, and the control data for displaying those product images are read out. Then, at the display, only the product images belonging to the category selected by the user are displayed. Accordingly, the user can narrow down a large number of product images to desired product images, and as a result, can easily and quickly order a desired product.

In an order system in which a desired product is selected from a plurality of product images displayed in display area and an order is placed via a network, the order system of the present invention comprises a mechanism for switching any number of a predetermined number of product images displayed within a specific range of a display area, automatically and in accordance with a predetermined order, from the plurality of product images, and selecting a product image displayed within the specific range and placing an order for a product.

In accordance with the order system of the present invention, any number of a predetermined number of product images displayed within a specific range of a display area are switched, automatically and in accordance with a predetermined order, from a plurality of product images. In this way, the user can confirm various products without carrying out any operation, and can select a product image displayed within the specific range and place an order for the product.

The order system of the present invention may comprise a function for adjusting a cycle of automatically switching the product images. In this way, the user can confirm products at a timing desired by the user.

The order system of the present invention may comprise a function for changing the predetermined number. In this way, the user can adjust the product images to a size which can be viewed easily, in accordance with the size of the display screen.

### BRIEF DESCRIPTION OF THE DRAWINGS

Fig. 1 is a block diagram showing a schematic structure of an internet shopping system to which the present invention is applied.
Fig. 2 is a block diagram showing the structure of a main server of the internet shopping system.
Figs. 3A through 3C are diagrams showing the structure of data stored in a hard disk drive of the main server.
Fig. 4 is a diagram showing the structure of category management information, which is a portion of the data stored in the main server.
Fig. 5 is a diagram showing the structure of product management information, which is a portion of the data stored in the main server.
Fig. 6 is a block diagram showing the structure of a communication terminal of the internet shopping system.
Fig. 7 is a flowchart showing operational processes of a control section provided at the main server.
Fig. 8 is a diagram showing a category selection screen displayed on a display portion of the communication terminal.
Fig. 9 is a diagram showing the order of display of category images displayed in an image display area within the category selection screen.
Fig. 10 is a flowchart showing operational processes of the control section at a time when the category images are switched while being moved in a predetermined direction.
Fig. 11A through 11C are diagrams for explaining display switching of category images which are displayed on the display portion of the communication terminal.
Fig. 12 is a diagram showing a product selection screen which is displayed on the display portion of the communication terminal.
Fig. 13 is a diagram showing a product related information screen which is displayed on the display portion of the communication terminal.
Fig. 14 is a diagram showing a product purchase screen which is displayed on the display portion of the communication terminal.
Figs. 15A through 15C are diagrams for explaining states at a time when, among six images which are arranged in two rows and three columns, the images in each row are moved to the left two at a time.
Figs. 16A through 16C are diagrams for explaining states at a time when, among six images which are arranged in two rows and three columns, the images in each row are moved to the left three at a time.
Fig. 17 is a diagram for explaining a state at a time when four images are arranged in two rows and two columns.
Fig. 18 is a diagram for explaining a state at a time when eight images are arranged in two rows and four columns.

### DESCRIPTION OF THE PREFERRED EMBODIMENTS

Hereinafter, embodiments in a case in which the present invention is applied to an internet shopping system will be described with reference to the drawings.

### [First Embodiment]

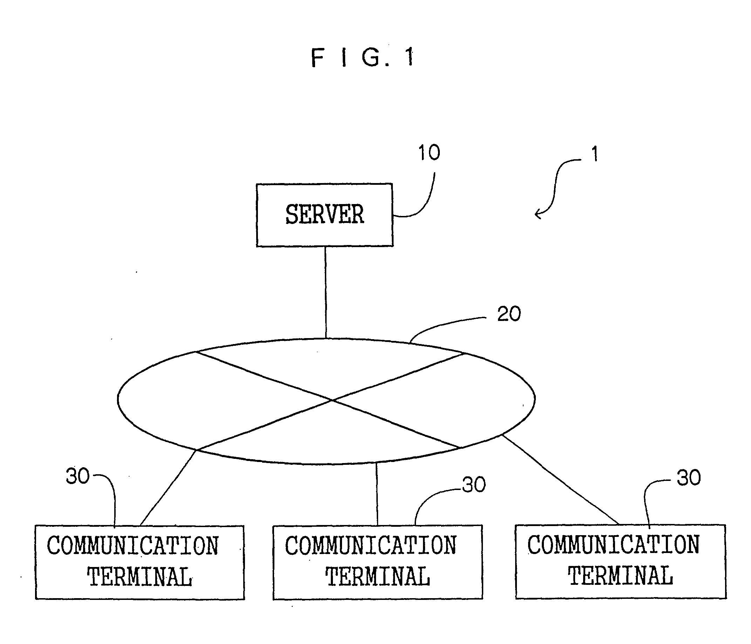

As shown in Fig. 1, an internet shopping system 1 relating to a first embodiment of the present invention is formed from a main server 10 which is owned by a manager who manages the internet shopping, and a plurality of communication terminals 30 which are used by general users. The main server 10 and the respective communication terminals 30 are connected via the internet 20, and various types of information can be transmitted and received due to communication therebetween.

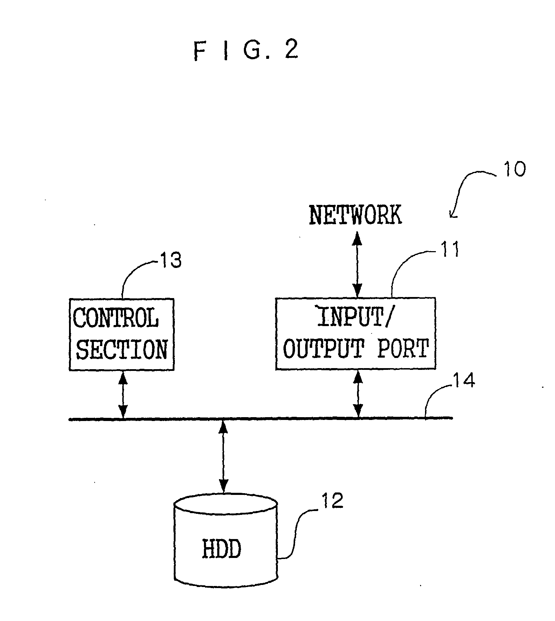

Fig. 2 is a block diagram showing the structure of the main server 10. The main server 10 has an input/output port 11 which carries out inputting and outputting of various types of information between the main server 10 and the internet 20, a hard disk drive 12 which stores various types of databases and programs and the like, a control section 13 which controls overall operation, and a bus 14 which connects these respective components together.

The main server 10 may be provided with an input device (not shown) such as a keyboard or a mouse or the like for inputting various types of information, a monitor (display) (not shown) for displaying various menu screens and processing results and the like, and a printer (not shown) for printing various types of information. Because such hardware are not directly related to the present invention, detailed description thereof is omitted.

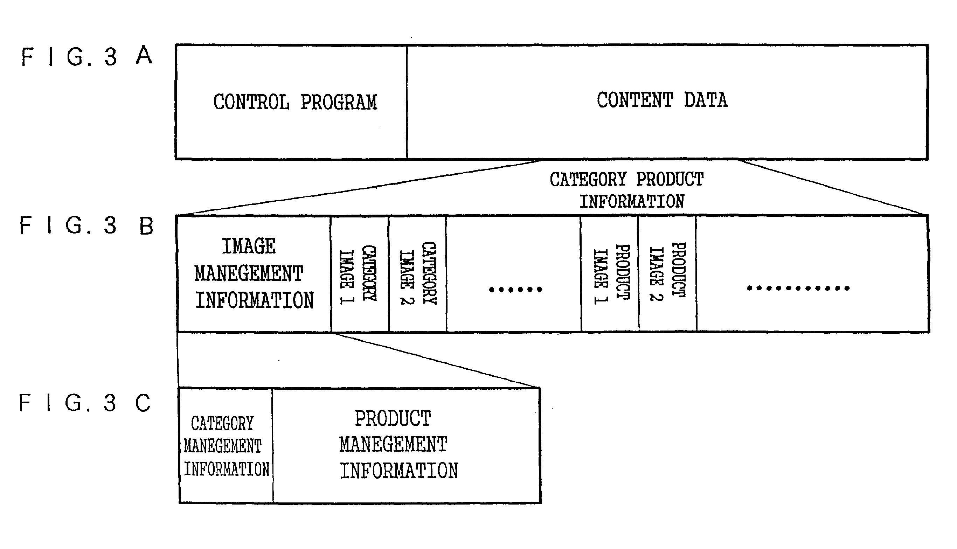

Figs. 3A through 3C are diagrams which schematically show the structure of data stored in the hard disk drive 12 of the main server 10. To simplify explanation, a single hard disk drive is shown, but data may be dispersed among a plurality of hard disk drives.

As shown in Fig. 3A, the data stored in the hard disk drive 12 is formed from content data which is data for forming an HTML file or another file, and a control program for receiving an order for the product on the basis of input information from the communication terminal 30 and controlling the display. The content data includes product category information formed from an image of the product which is being sold by internet shopping (hereinafter "product image"), an image of the category of the product (hereinafter "category image"), and the like.

As shown in Fig. 3B, the category product information has image management information which manages the positions at which the product images or the like are stored, and the categories relating to the products, and other information; category images 1, 2, ... which exist for the respective categories of the products; and product images 1, 2, ... which exist for the respective products. As shown in Fig. 3C, the image management information is formed by category management information and product management information.

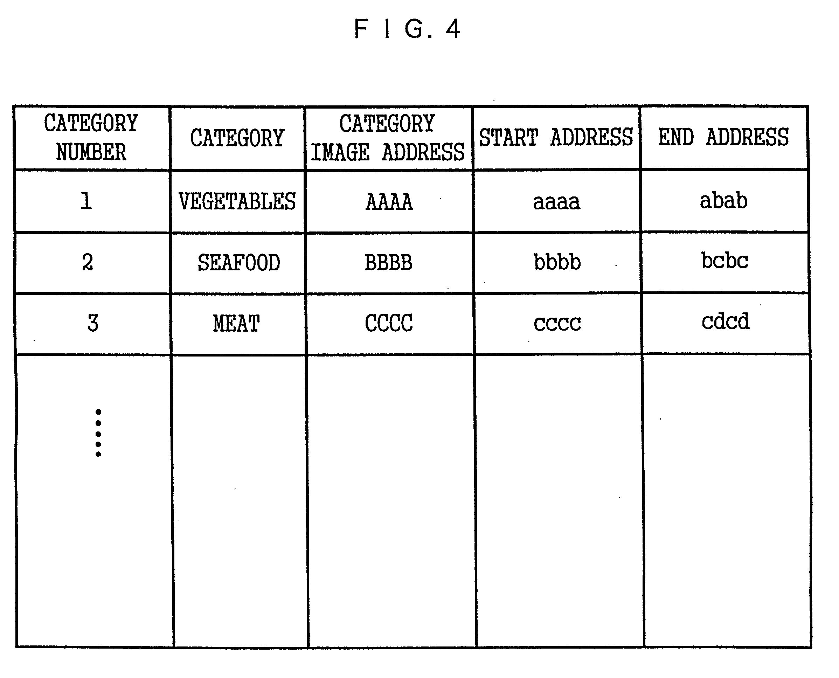

As shown in Fig. 4, the category management information is formed by a category number, a category image address, a start address, and an end address. The category number expresses the order in which the category images are displayed, and is a number from 1 to the number of category images. The category expresses the group of the product. The category image address is an address expressing the place where the category image corresponding to that category is stored. The start address is an address expressing the first product number of the plural products belonging to the category. The end address is an address expressing the last product number of the plural products belonging to the category.

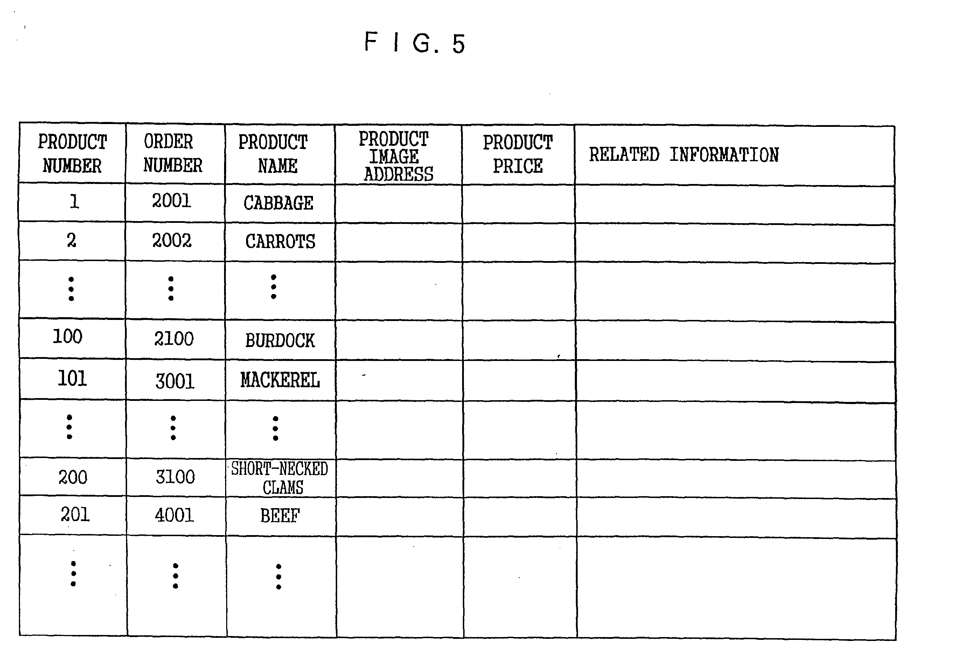

As shown in Fig. 5, the product management information is formed by a product number, an order number, the name of the product, the product image address, the product price, and related information. The product number expresses the order in which the product images are displayed, and is a number from one to the number of product images. Here, the product numbers of products belonging to the same category are consecutive. For example, in Fig. 5, the products from product number 1 to product number 100 are "cabbage", "carrots", ... "burdock", and all belong to the category of vegetables. The products from product number 101 to product number 200 are "mackerel", ... "short-necked clams", and all belong to the category of seafood.

The product name is the specific name of the product which the user purchases. The product image address is an address expressing the place where the product image corresponding to that product is stored. The product price is the price per one product (or one pack of the product). Related information is detailed information such as the size, material, geographical region where the product was produced, or the like of the product.

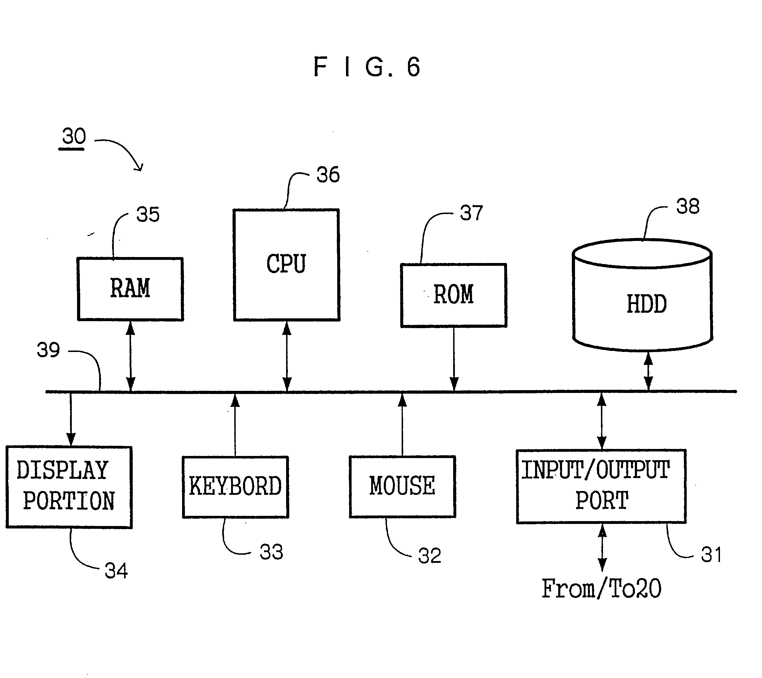

Fig. 6 is a block diagram showing the specific structure of the communication terminal 30. The communication terminal 30 is provided with an input/output port 31 to and from which data is inputted and outputted via the internet 20; a mouse 32 which is a pointing device which moves a pointer to select a category or a product; a keyboard 33 for inputting numbers or characters or the like; a display portion 34 which displays the categories, the products, and the like; a RAM 35 used as a work area at the time that respective programs are executed; a CPU 36 which controls overall operation; a ROM 37 in which various programs and predetermined parameters are stored; a hard disk drive 38 which stores data; and a bus 39 which connects the respective portions.

An exclusive-use input device, which is equipped with the function of a pointing device and the function of inputting numbers and characters and the like, may be used in place of the mouse 32 and the keyboard 33. Further, an exclusive-use controller which is used in a game device may be used.

For example, a liquid crystal display, a cathode ray tube display, an EL display, a plasma display, or a television receiver may be used as the display portion 34. Or, a touch panel which is equipped with the respective functions of the mouse 32, the keyboard 33 and the display portion 34 may be used.

The CPU 36 operates in accordance with a control program which is stored in the ROM 37. For example, the CPU 36 displays an internet shopping website on the display portion 34 on the basis of data from the main server 10, or transmits information inputted from the mouse 32 or keyboard 33 to the internet 20 via the input/output port 31.

In the internet shopping system 1 structured as described above, first, the main server 10 transmits data for displaying a website to the communication terminal 30. In accordance with operations of the user, the communication terminal 30 transmits to the main server 10 selection information of a category or product. On the basis of the selection information from the communication terminal 30, the main server 10 transmits data for displaying other websites, or carries out processing for receiving orders for products form the communication terminal 30.

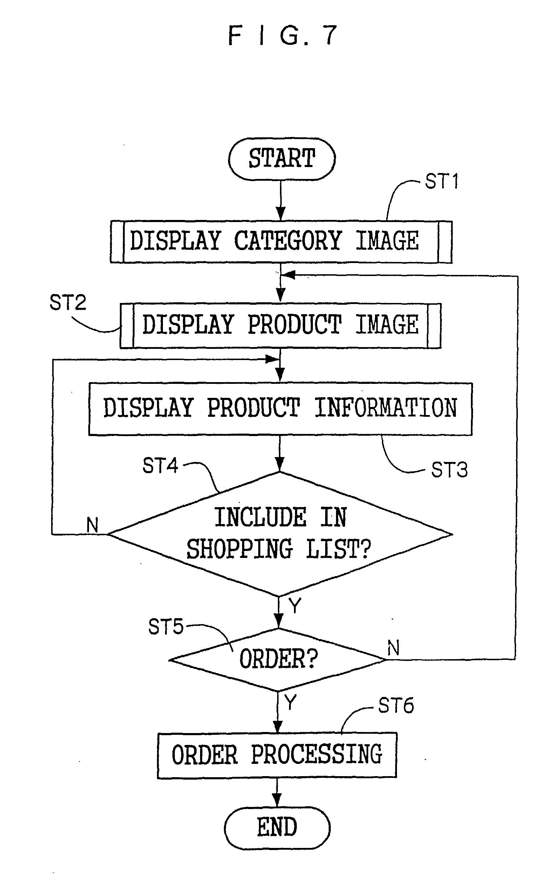

Fig. 7 is a flowchart explaining operational processes of the main server 10. Specifically, the control section 13 of the main server 10 carries out processings from step ST1 through step ST6.

In step ST1, the control section 13 displays the category screen on each communication terminal 30. When any of the categories is selected, the routine moves on to step ST2. Specifically, the control section 13 first reads the control program or content data from the hard disk drive 12, and transmits to each communication terminal 30 the data for the user to select a category.

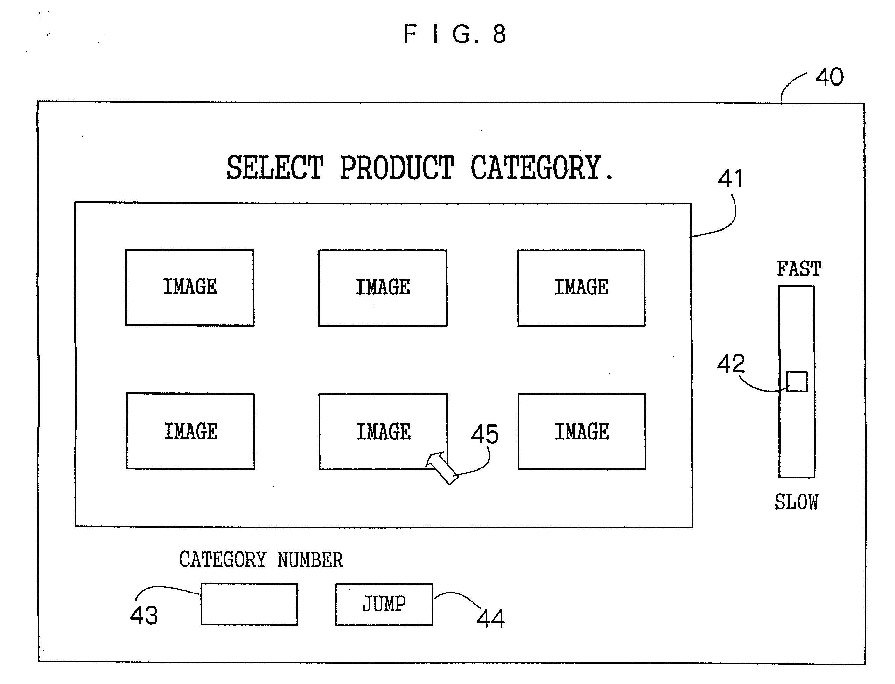

Fig. 8 is a diagram showing a category selection screen 40 which is displayed on the display portion 34 of the communication terminal 30. The category selection screen 40 has an image display area 41 in which a plurality of category images are displayed, and a speed control bar 42 which adjusts the display speed of the category images.

A total of six category images in two rows and three columns are displayed in the image display area 41. Here, the category images are displayed in a predetermined arrangement in accordance with the order of the category numbers shown in Fig. 4.

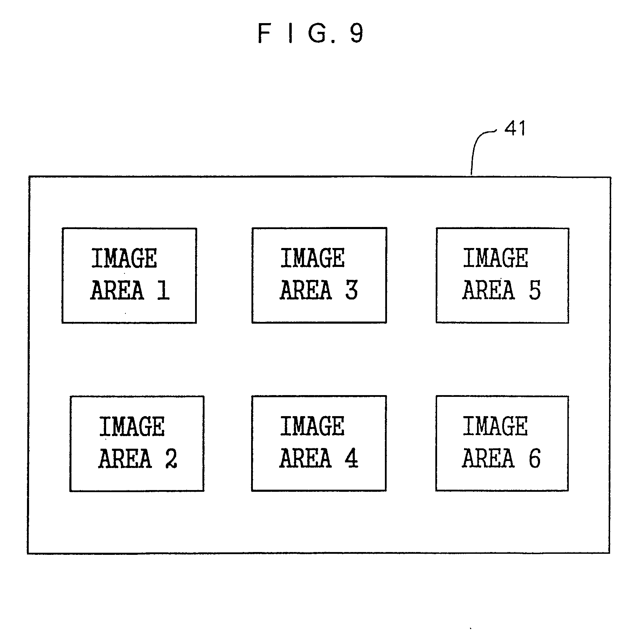

Fig. 9 is a diagram showing the order of arrangement of the category images displayed in the image display area 41. Namely, the numbers 1 through 6 express the order of arrangement of the category images in the image display area 41. For example, in a case in which category images from category number 1 to category number 6 are displayed, the category image of category number 1 is displayed in image area 1, the category image of category number 2 is displayed in image area 2, ... and the category image of category number 6 is displayed in image area 6. Further, for example, in a case in which the category images from category number 3 to category number 8 are displayed, the category image of category number 3 is displayed in image area 1, the category image of category number 4 is displayed in image area 2, ... and the category image of category number 8 is displayed in image area 6.

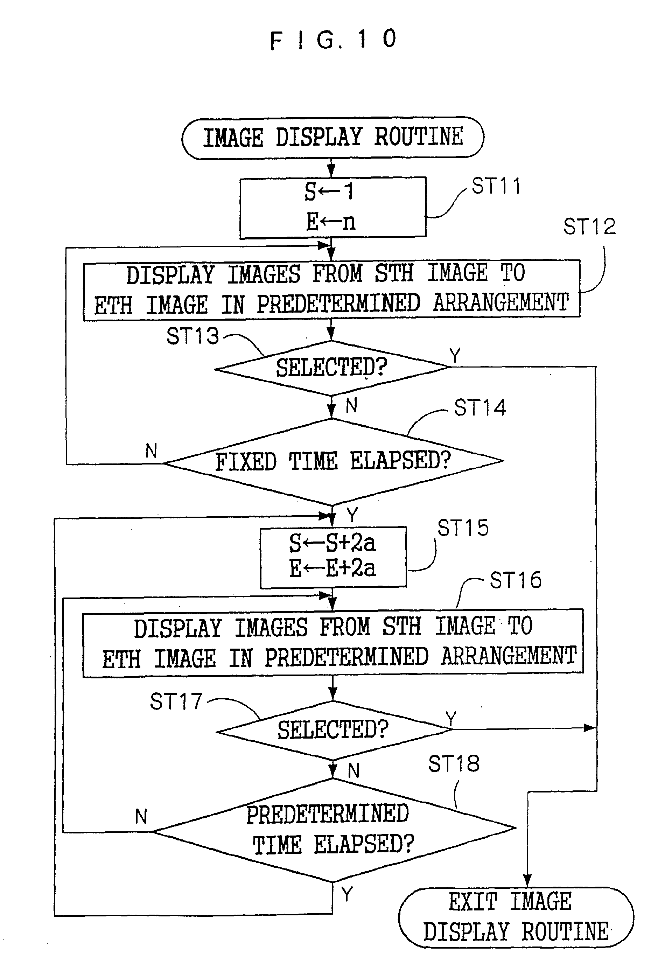

The control section 13 carries out the processings from step ST11 to step ST18 shown in Fig. 10, in order to switch the category images of each row to new category images while moving the category images of each row to the left.

In step ST11, the control section 13 sets an initial value of the first number S, which is the first category number of the category images which are to be displayed, and sets an initial value of the last number E, which is the last category number of the category images which are to be displayed. Here, because six category images are to be displayed simultaneously in the image display area 41, S ← 1, E ← 6 are set, and the routine moves on to step ST12.

In step ST12, the control section 13 transmits to the communication terminal 30 the data for displaying the category images of the category numbers from the Sth category number to the Eth category number simultaneously in the arrangement shown in Fig. 9. The routine then moves to step ST13. In this way, the category images of category numbers 1, 2, ..., 6 are displayed in the image areas 1, 2, ..., 6 of the display portion 34.

By the user placing the pointer 45 on a desired category image and clicking, the category corresponding to that category image can be selected. At this time, the CPU 36 transmits, to the main server 10 and via the input/output port 31, information expressing the category which has been selected by the mouse 32 (hereinafter, this information is called "category selection information").

In step ST13, the control section 13 determines whether or not any of the categories has been selected. Specifically, the control section 13 determines whether or not the input/output port 11 has received category selection information from the communication terminal 30. When the input/output port 11 has received category selection information, the control section 13 determines that a category has been selected, and exits the category image display routine. On the other hand, if the input/output port 11 has not received category selection information, the control section 13 determines that no category has been selected, and the routine moves on to step ST14. Note that, before a category is selected, updating of the category images can be stopped by pressing a stop button (not shown).

In step ST14, the control section 13 judges whether a fixed time has elapsed from the start of the processing of step ST11. If it is judged that the fixed time has elapsed, the routine proceeds to step ST15. If it is judged that the fixed time has not elapsed, the routine returns to step ST12. In a case in which six category images are first displayed on the category selection screen 40, the fixed time is preferably a period of time over which the user can ascertain each category image, e.g., six seconds.

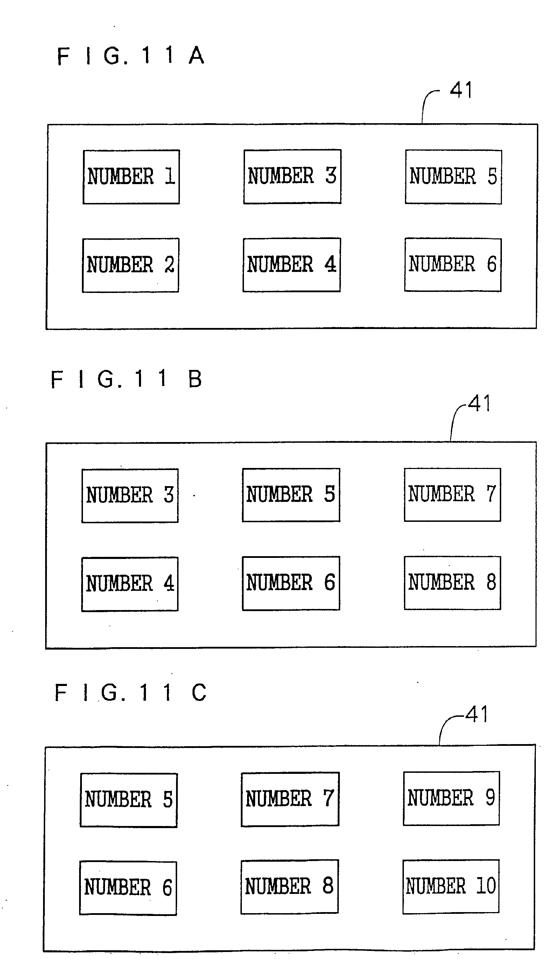

By repeating the processings from step ST12 through step ST14, the control section 13 can display the category images of category numbers 1, 2, ..., 6 for, for example, six seconds, on the category selection screen 40 of the communication terminal 30 as shown in Fig. 11A.

In step ST15, the control section 13 adds 2a to each of the first number S and the last number E. Namely, the processings of (S ← S + 2a) and (E ← E + 2a) are carried out, and the routine moves on to step ST16. Here, the value of a expresses the number of category images to be deleted (i.e., added) in each row at the time when the display of the category images is switched. Further, the coefficient "2" of a expresses the number of rows when the category images are arranged. In the present embodiment, because the category images are switched one by one in each row, a = 1.

In step ST16, the control section 13 transmits to the communication terminal 30 data for simultaneously displaying in the arrangement shown in Fig. 9 the category images from category number S through E, and the routine then moves on to step ST17.

In step ST17, the control section 13 judges whether or not any of the categories has been selected, i.e., whether or not category selection information selecting a category has been transmitted from the communication terminal 30. When category selection information has been received, the control section 13 determines that a category has been selected, and exits the category image display routine. On the other hand, when no category selection information has been received, it is judged that no category has been selected, and the routine moves on to step ST18. Here as well, before a category is selected, updating of the category images can be stopped by a stop button (not shown) being pressed.

In step ST18, the control section 13 judges whether a predetermined time has elapsed. When it is judged that the predetermined time has elapsed, the routine returns to step ST15. When it is judged that the predetermined time has not elapsed, the routine returns to step ST16.

In this way, by carrying out the processings from step ST15 to step ST18, the control section 13 can display the category images of category numbers 3, 4, ... 8 for, for example, one second, on the category selection screen 40 of the communication terminal 30 as shown in Fig. 11B. Due to the control section 13 carrying out the above-described processings, as shown in Fig. 11C, the category images of category numbers 5, 6, ..., 10 can be displayed for, for example, one second. Namely, the control section 13 carries out control to delete the two category images which are in the far left column, move to the left and display each of the remaining category images, and simultaneously, display two new category images in the far right column. In a case in which six category images are first displayed on the category selection screen 40, a period of time which allows the user to ascertain the respective category images is needed for the fixed time. However, from the second time on, the time required for the user to ascertain the category images can be shortened, and the fixed time can be made to be shorter than the first display.

The category images which are deleted may be stored in the hard disk drive 38 of the communication terminal 30 so that they can easily be displayed again. Or, it is possible to not store the category images which are deleted. If category images which are deleted are not stored, and then thereafter, are to be viewed again, they may again be transmitted to the communication terminal 30 from the main server 10.

The speed for switching the display of the category images can be adjusted by the user operating the mouse 32 provided at the communication terminal 30. In order to control the switching speed of the category images, the user may operate the mouse 32 and drag the speed control bar 42. For example, if the user drags the speed control bar 42 by a predetermined number of steps in, for example, the "fast" direction, the CPU 36 transmits, to the main server 10 and via the input/output port 31, speed control information for making the switching speed faster by the predetermined number of steps.

When the control section 13 of the main server receives speed control information via the internet 20, the "predetermined time" in step ST18 is set to be shorter by the predetermined number of steps, and the processings from step ST15 through step ST18 are repeatedly carried out. As a result, the switching speed of the category images displayed on the image display area 41 of the category selection screen 40 can be made faster.

Conversely, if the category image switching speed is to be made slower, the user may drag the speed control bar 42 by a predetermined number of steps in, for example, the "slow" direction. At this time, the control section 13 of the main server 10 may set the "predetermined time" in step ST18 to be longer by the predetermined number of steps.

As described above, when the control section 13 of the main server 10 carries out the processings from step ST11 through step ST18 shown in Fig. 10 and exits the category image display routine, next, the routine moves on to step ST2 in Fig. 7.

In step ST2, the control section 13 displays at the communication terminal 30 the product images of the respective products belonging to the selected category, and when any of the products is selected, the routine moves on to step ST3. Specifically, the control section 13 refers to the category management information shown in Fig.4, and searches for the start address and the end address of the selected category. Then, the control section 13 reads out from the hard disk drive 12 the content data for displaying the product images of the product numbers from the start address to the end address, and transmits the content data to the communication terminal 30 via the input/output port 11. As a result, a product selection screen, which has the product images of the respective products belonging to the selected category, is displayed on the display portion 34 of the communication terminal 30.

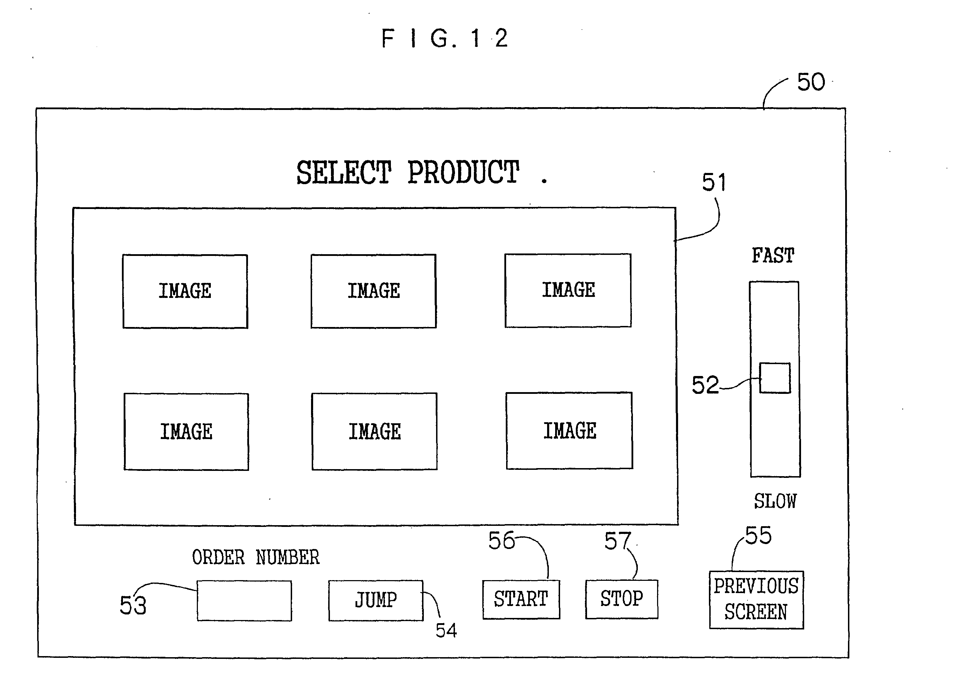

Fig. 12 is a diagram showing a product selection screen 50 displayed on the display portion 34. The product selection screen 50 has an image display area 51 at which product images are displayed; a speed control bar 52 which controls the switching speed of the product images; an order number input area 53 where an order number is input; a jump button 54 for displaying a product image of an inputted order number; a previous screen button 55 for returning to the category selection screen 40 shown in Fig. 8; a start button 56 for starting automatic switching of the display of the product images; and a stop button 57 for stopping the automatic switching of the display of the product images.

A total of six product images in two rows and three columns are displayed in the image display area 51. Here, the product images are displayed in the order of the product numbers shown in Fig. 5. Further, the product images are arranged in accordance with the order shown in Fig. 9, in order from the smallest product number. Namely, the numbers 1 through 6 shown in Fig. 9 express the order of display of the product images in the image display area 51. For example, in a case in which the product images from product number 1 through product number 6 are displayed, the product image of product number 1 is displayed in image area 1, the product image of product number 2 is displayed in image area 2, ..., and the product image of product number 6 is displayed in image area 6. Further, for example, in a case in which the product images from product number 3 through product number 8 are displayed, the product image of product number 3 is displayed in image area 1, the product image of product number 4 is displayed in image area 2, ..., and the product image of product number 8 is displayed in image area 6.

The control section 13 carries out the processings from step ST11 to step ST18 shown in Fig. 10, in order to switch the product images of each row to new product images while moving the product images of each row to the left. These processings are the same as the processings for switching to the new category images while moving the category images to the left, and thus detailed description thereof will be omitted.

By the user operating the mouse 32 or the keyboard 33 provided at the communication terminal 30, the display switching speed of the product images displayed on the product selection screen 50 can be adjusted, and a desired product image can be directly displayed.

Here, in order to directly display a desired product image, the user may place the pointer on the order number input area 53 and click, and input the desired order number by the keyboard 33, and lastly, click on the jump button 54. the CPU 36 asks the main server 10, via the input/output portion 31, to transmit the product image corresponding to the inputted order number.

The control section 13 of the main server 10 reads out the product image from the hard disk drive 12, and transmits it to the communication terminal 30 via the input/output port 11. As a result, the desired product image is directly displayed on the image display area 51 of the product selection screen 50.

When the user clicks on the previous screen button 55 of the product selection screen 50, the previous screen, i.e., the category selection screen 40 shown in Fig. 8, is displayed on the display portion 34 of the communication terminal 30.

As described above, when the control section 13 of the main server 10 carries out the processings from step ST11 to step ST18 shown in Fig. 10 and exits the product image display routine, the routine next moves on to step ST3 in Fig. 7.

In step ST3, the control section 13 effects control for displaying related information of the selected product. Specifically, the control section 13 refers to the product management information shown in Fig. 5, and reads out from the hard disk drive 12 the content data including the related information corresponding to the selected product. Then, the control section 13 transmits the content data to the communication terminal 30 via the input/output port 11, and the routine moves on to step ST4. As a result, a product related information screen, which has the product image and the related information of the selected product, is displayed on the display portion 34 of the communication terminal 30.

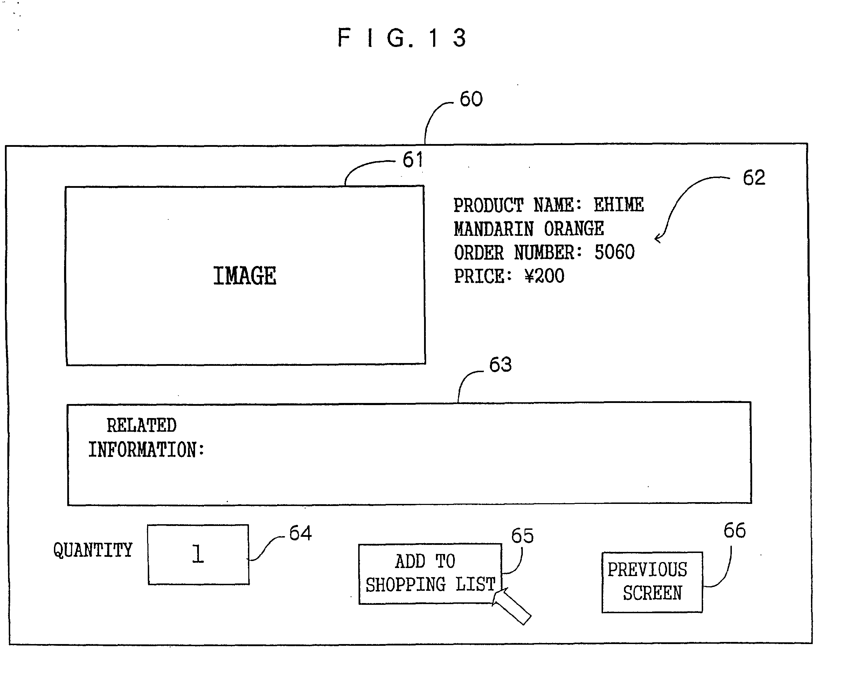

Fig. 13 is a diagram showing a product related information screen 60 displayed on the display portion 34. The product related information screen 60 has an image display area 61 at which one product image is displayed; a basic information display area 62 at which basic information regarding the product is displayed; a related information display area 63 at which detailed information relating to the product is displayed; a quantity display area 64 at which the quantity of the product is displayed; an add button 65 for adding the product to the shopping list; and a previous screen button 66 for returning to the previous screen. The shopping list is a file which describes the products and quantities to be purchased by the user.

The product image, which was selected in previously-described step ST2, is displayed in an enlarged manner in the image display area 61. Basic information, such as the product name, the order number, and the price which are described in the product management information shown in Fig. 5, is displayed in the basic information display area 62. Related information, such as the material and size and the like of the product which are described in the product management information, is displayed in the related information display area 63.

The quantity to be purchased of the product is displayed in the quantity display area 64. Initially, 1 is displayed as the default value. When two or more of a product are to be purchased, the user may input the quantity of the product in the quantity display area 64. When the user clicks on the previous screen button 66, the previous screen, i.e., the product selection screen 50 shown in Fig. 12, is displayed on the display portion 34.

The add button 65 is a button for adding the product displayed in the image display area 61 to the shopping list. When the user clicks on the add button 65, the CPU 36 transmits to the main server 10 add-to-list information expressing additional contents, in order to add to the shopping list the product displayed in the image display area 61 and the quantity displayed in the quantity display area 64.

In step ST4, the control section 13 judges whether or not a product displayed at the communication terminal 30 is to be included in the shopping list. Here, when the control section 13 judges that the input/output port 11 has received add-to-list information and the add-to-list information is received, the control section 13 determines that the product is to be included in the shopping list, and the routine moves on to step ST5. On the other hand, if add-to-list information has not been received, the control section 13 judges that the product is not to be included in the shopping list, and the routine returns to step ST3.

In step ST5, the control section 13 computes the purchase amounts (of money) of the respective products listed in the shopping list and the total amount (of money). Then, the control section 13 reads out from the hard disk drive 12 the content data for displaying the results of computation, and transmits the data to the communication terminal 30 via the input/output port 11. As a result, a product purchase screen is displayed on the display portion 34 of the communication terminal 30.

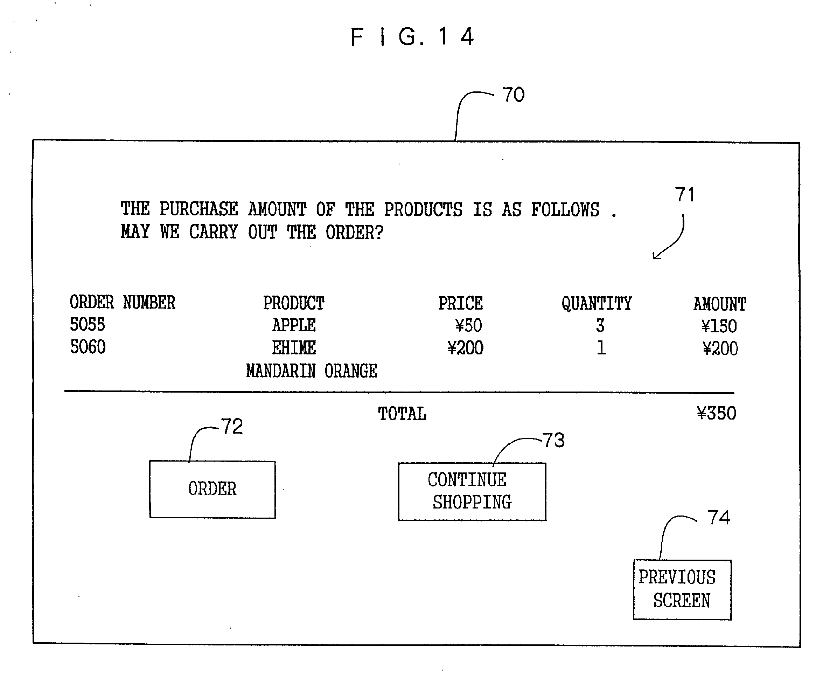

Fig. 14 is a diagram showing a product purchase screen 70 which is displayed on the display portion 34. The product purchase screen 70 has a purchase amount area 71 in which the purchase amount of each product is displayed; an order button 72 for executing the order; a continue shopping button 73 for continuing shopping; and a previous screen button 74 for returning to the previous screen.

In the purchase amount area 71, for each of the products which are included in the shopping list, the order number, the product name, the price per product (or per pack) , the purchased quantity of the product, and the purchase amount of the product are displayed, and the total amount is also displayed.

The order button 72 is a button for requesting an order of the products and the quantities thereof displayed in the purchase amount area 71. When the user requests an order of the contents which are displayed in the purchase amount area 71, the user may click on the order button 72. At this time, the CPU 36 transmits, to the main server 10 and via the input/output port 31, the order information for ordering the products listed in the shopping list.

The continue shopping button 73 is used when there are products which the user wishes to purchase in addition to the products which are displayed in the purchase amount area 71. For example, when the user clicks on the continue shopping button 73, the product selection screen 50 is displayed on the display portion 34. In this way, the user can select other products.

The previous screen button 74 is used at the time of returning to the screen which was displayed immediately before. For example, when the user clicks on the previous screen button 74, the product related information screen 60 shown in Fig. 13 is displayed on the display portion 34.

Then, the control section 13 of the main server 10 judges whether or not there is an order from the communication terminal 30, and specifically, whether or not the input/output port 11 has received order information which the communication terminal 30 has outputted. When the control section 13 judges that order information has been received, the control section 13 judges that there is an order from the communication terminal 30, and the routine moves on to step ST6. On the other hand, in a case in which order information has not been received, the control section 13 judges that there is no order from the communication terminal 30, and the routine returns to step ST2.

In step ST6, the control section 13 transmits, to a store or a factory (both not shown), the contents which are described in the shopping list, and order processing is completed.

As described above, in the internet shopping system 1 relating to the first embodiment of the present invention, due to the main server 10 automatically displaying new images successively while moving images of categories or products in a predetermined direction, a large number of images can be displayed at the communication terminal 30 even if the user does not scroll. As a result, even in cases in which the number of products is extremely large, the user can order products easily without the operational load on the user being excessively large.

### [Second Embodiment]

Next, a second embodiment of the present invention will be described. In the internet shopping system 1 relating to the second embodiment, the main server 10 batch transmits the control program and content data to the communication terminal 30. On the basis of these data, the communication terminal 30 displays category images and product images, and orders desired products from the main server 10.

The present embodiment differs from the first embodiment in that, in the first embodiment, the operations carried out by the main server 10 are mainly carried out by the communication terminal 30. Thus, descriptions of portions such as the display screens and the like which are the same will be omitted, and description will mainly be given of the operations of the communication terminal 30.

The control program and content data which the main server 10 transmits to the communication terminal 30 are structured similarly to those from Figs. 3A through 3C to Fig. 5.

The CPU 36 of the communication terminal 30 receives these data via the input/output port 31, and stores them in the hard disk drive 38. Then, the CPU 36 carries out the processings from step ST1 through step ST6 shown in Fig. 7.

In step ST1, the CPU 36 reads out the control program and content data from the hard disk drive 38, and displays the category selection screen 40 shown in Fig. 8 on the display portion 34. Then, when any of the categories have been selected, the routine moves on to step ST2.

At this time, the CPU 36 carries out the processings from step ST11 through step ST18 shown in Fig. 10 in order to switch the category images of each row in the image display area 41 while moving them to the left.

In step ST11, the CPU 36 sets the initial values of the first number S and the last number E of the category images to be displayed. Here, S ← 1, E ← 6 are set, and the routine moves on to step ST12.

In step ST12, the CPU 36 simultaneously displays, in the arrangement shown in Fig. 9, the category images of the Sth through the Eth category numbers, and the routine moves on to step ST13. In this way, the category images of the category numbers 1, 2, ...6 are displayed in the image areas 1, 2, ..., 6 of the display portion 34.

By the user placing the pointer on the desired category image and clicking, the category corresponding to that category image can be selected.

In step ST13, the CPU 36 judges whether any of the categories has been selected, and when a category has been selected, exits the category image display routine. On the other hand, when the CPU 36 judges that no category has been selected, the routine moves on to step ST14.

In step ST14, the CPU 36 judges whether a fixed time (e.g., six seconds) has elapsed from the start of the processing of step ST11. If it is judged that the fixed time has elapsed, the routine moves on to step ST15. If it is judged that the fixed time has not elapsed, the routine returns to step ST12.

In this way, by repeating the processings from step ST12 through step ST14, the CPU 36 can display for, for example, six seconds, the category images of category numbers 1, 2, .., 6 on the category selection screen 40 as shown in Fig. 11A.

In step ST15, the CPU 36 adds 2a to each of the first number S and the last number E. Namely, the processings of (S ← S + 2a) and (E ← E + 2a) are carried out, and the routine moves on to step ST16. Here, a = 1.

In step ST16, the CPU 36 controls the display portion 34 such that the Sth through Eth category images are simultaneously displayed in the arrangement shown in Fig. 9, and the routine moves on to step ST17.

In step ST17, the CPU 36 judges whether or not any of the categories has been selected. When it is judged that a category has been selected, the CPU 36 exits the category image display routine. On the other hand, when it is judged that no category has been selected, the routine moves on to step ST18.

In step ST18, the CPU 36 judges whether a predetermined time (e.g., one second) has elapsed. When it is judged that the predetermined time has elapsed, the routine returns to step ST15. When it is judged that the predetermined time has not elapsed, the routine returns to step ST16.

In this way, by carrying out the processings from step ST15 to step ST18, the CPU 36 can display the category images of category numbers 3, 4, ..., 8 for, for example, one second, on the category selection screen 40 as shown in Fig. 11B. Due to the CPU 36 again carrying out the above-described processings, as shown in Fig. 11C, the category images of category numbers 5, 6, ..., 10 can be displayed for, for example, one second. Namely, the CPU 36 carries out control to delete the two category images which are in the far left column, move to the left and display each of the remaining category images, and simultaneously, display two new category images in the far right column.

The speed for switching the display of the category images can be adjusted by the user operating the mouse 32. In order to control the switching speed of the category images, the user may operate the mouse 32, and drag the speed control bar 42. For example, if the user drags the speed control bar 42 by a predetermined number of steps in, for example, the "fast" direction, the CPU 36 sets the "predetermined time" in step ST18 to be shorter by the predetermined number of steps, and the processings from step ST15 through step ST18 are repeatedly carried out. As a result, the switching speed of the category images displayed on the image display area 41 of the category selection screen 40 can be made faster.

Conversely, if the category image switching speed is to be made slower, the user may drag the speed control bar 42 by a predetermined number of steps in, for example, the "slow" direction. At this time, the CPU 36 may set the "predetermined time" in step ST18 to be longer by the predetermined number of steps.

As described above, when the CPU 36 carries out the processings from step ST11 through step ST18 shown in Fig. 10 and exits the category image display routine, next, the routine moves on to step ST2 in Fig. 7.

In step ST2, the CPU 36 displays on the display portion 34 the product images of the plurality of products belonging to the selected category, and when any of the products is selected, the routine moves on to step ST3.

Specifically, the CPU 36 refers to the category management information shown in Fig. 4, and searches for the start address and the end address of the selected category. Then, the CPU 36 reads out from the hard disk drive 38 the content data for displaying the product images of the product numbers from the start address to the end address, and displays the product selection screen 50 shown in Fig. 12 on the display portion 34.

The CPU 36 carries out the processings from step ST11 to step ST18 shown in Fig. 10, in order to switch the product images of each row while moving the product images of each row to the left. These processings are the same as the processings for switching to the new category images while moving the category images to the left, and thus, detailed description thereof will be omitted.

By the user operating the mouse 32 or the keyboard 33, the display switching speed of the product images displayed on the product selection screen 50 can be adjusted, and a desired product image can be directly displayed.

In order to directly display a desired product image, the user may place the pointer on the order number input area 53 and click, and input the desired order number by the keyboard 33, and lastly, click on the jump button 54. At this time, the CPU 36 reads out the product image from the hard disk drive 38, and can directly display that product image on the image display area 51 of the product selection screen 50.

When the CPU 36 executes the processings from step ST11 through step ST18 shown in Fig. 10 and exits the product image display routine, next, the routine moves on to step ST3 shown in Fig. 7.

In step ST3, the CPU 36 effects control for displaying related information of the selected product. Specifically, the CPU 36 refers to the product management information shown in Fig. 5, and reads out from the hard disk drive 38 the content data including the related information corresponding to the selected product. Then, the CPU 36 displays, on the display portion 34, the product related information screen 60 which has the product image and the related information of the selected product.

At this time, when the user clicks on the add button 65, the CPU 36 adds to the shopping list the product displayed in the image display area 61 and the quantity displayed in the quantity display area 64.

In step ST4, the CPU 36 judges whether or not the product displayed on the display portion 34 is to be included in the shopping list, i.e., whether or not the add button 65 has been clicked. When the add button 65 has been clicked, the CPU 36 determines that the product is to be included in the shopping list, and the routine moves on to step ST5. On the other hand, if the add button 65 has not been clicked, the CPU 36 judges that the product is not to be included in the shopping list, and the routine returns to step ST3.

In step ST5, the CPU 36 computes the purchase amounts of the respective products listed in the shopping list and the total amount. Then, the CPU 36 reads out from the hard disk drive 38 the content data showing the results of computation, and displays the product purchase screen 70 on the display portion 34. When the user requests an order of the contents which are displayed in the purchase amount area 71, the user may click on the order button 72.

The CPU 36 judges whether or not the user has ordered, and specifically, whether or not the order button 72 has been clicked. If the order button 72 has been clicked, the CPU 36 judges that there is an order, and the routine moves on to step ST6. On the other hand, if the order button 72 has not been clicked, the CPU 36 judges that there is no order, and the routine returns to step ST2.

In step ST6, the CPU 36 transmits the shopping list to the main server 10. The main server 10 transmits, to a store or a factory (both not shown), the contents of the shopping list from the communication terminal 30, and order processing is completed.

As described above, in the internet shopping system 1 relating to the second embodiment of the present invention, due to the communication terminal 30 automatically displaying new images successively while moving images of categories or products in a predetermined direction, a large number of images can be displayed at the display portion 34 even if the user does not scroll. As a result, even in cases in which the number of products is extremely large, the user can order products easily from the main server 10 without the operational load on the user being excessively large.

Note that, in the present embodiment, the communication terminal 30 carries out predetermined processings by using the control program and the content data transmitted from the main server 10. However, the communication terminal 30 may read the control program and the content data from a recording medium such as a CD-ROM or a memory card or the like, and carry out the predetermined processings. For products which are not recorded on the recording medium such as the CD-ROM or the like, the main server 10 may transmit the data to the communication terminal 30 in the same way as in the first embodiment.

In the first and second embodiments, cases are described in which the category and product images are moved to the left. However, the present invention is not limited to the same, and the images may be moved to the right or in a vertical direction or in a diagonal direction.

Moreover, in the above-described embodiments, only respective images are displayed in image area 1 through image area 6 shown in Fig. 9. However, characters may be displayed together with the images. In this case, control may be carried out such that the characters are moved together with the images.

In the above-described embodiments, cases are described in which, as shown in Figs. 11A through 11C, among the six images which are arranged in two rows and three columns, one image at the left end of each row is deleted, the remaining images are shifted over one space toward the left, and one new image is displayed at the right end of each row. However, the present invention is not limited to the same. For each of images arranged in a matrix form, a predetermined number of images, which is two or more images, at the left end of each row may be deleted, the remaining images may be shifted over toward the left by a number of spaces which is equal to the predetermined number, and a number of new images equal to the predetermined number may be displayed at the right end of each row.

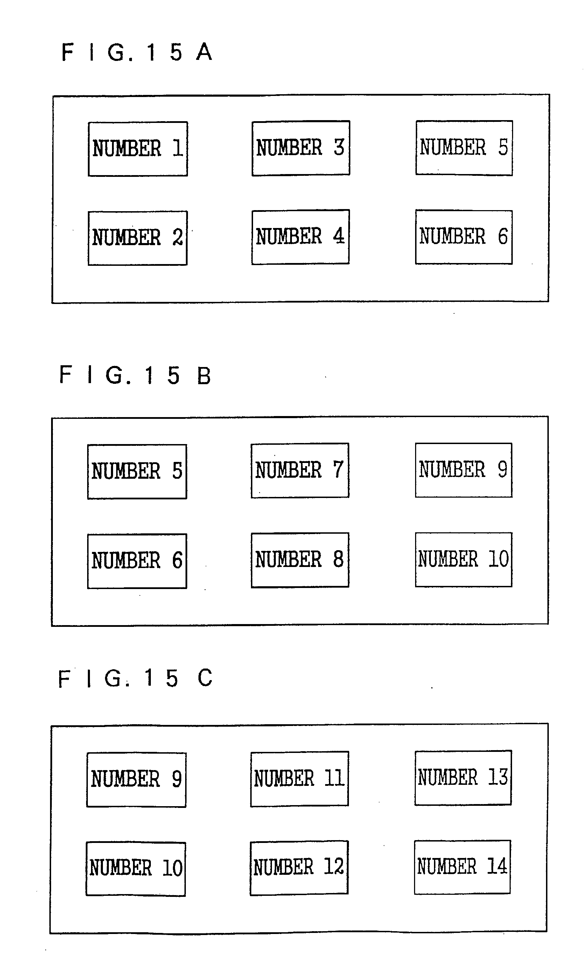

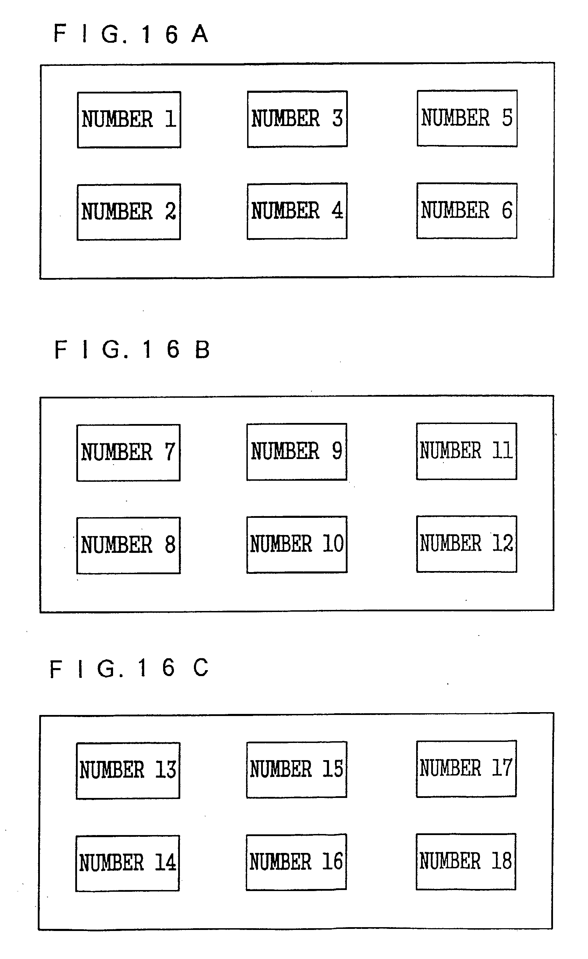

For example, if (the predetermined number: a = 2), as shown in Figs. 15A through 15C, the images in each row are moved two-by-two to the left. Further, if (the predetermined number: a = 3), as shown in Figs. 16A through 16C, the images in each row are moved three-by-three to the left.

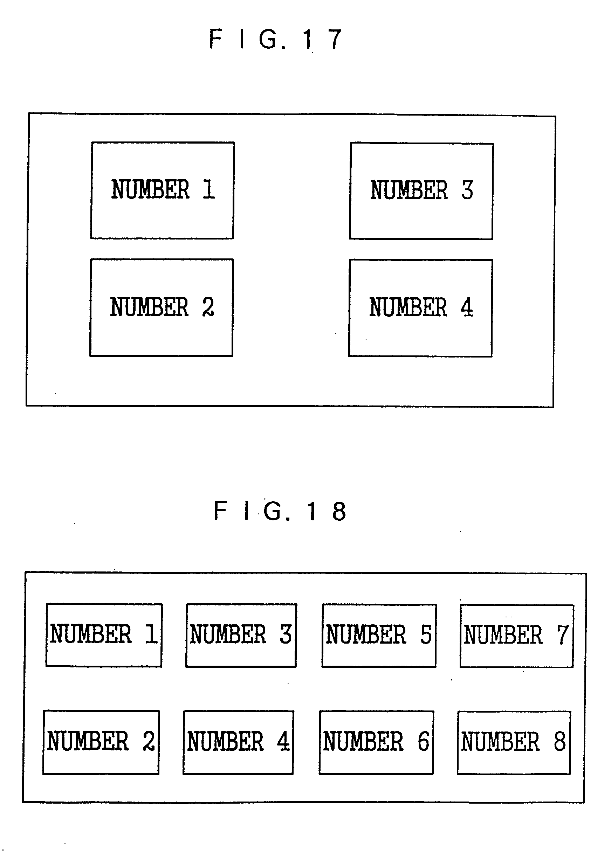

Moreover, in the above-described embodiments, cases are described in which six images are displayed in two rows and three columns. However, the present invention is not limited to the same. If the arrangements can be easily viewed by the user, as shown in Fig. 17, four images may be displayed in two rows and two columns, or as shown in Fig. 18, eight images may be displayed in two rows and four columns. In this way, although the number of displayed images is not limited, a number of from four to eight images is preferable. Further, the images do not necessarily have to be arranged in two rows, and may be arranged in one row or three or more rows.

Further, although data is transmitted and received via the internet 20 in the above-described embodiments, the present invention is not limited to the same. Instead of the internet 20, for example, a power line, an ISDN, a cable television broadcast line, or a digital television broadcast may be used.

In accordance with the order receiving device and order receiving method relating to the present invention, a large number of product images can successively be displayed without operation being carried out. Thus, even if the number of products increases, a user can easily search for a desired product without the operational load on the user increasing.

In accordance with the order system and ordering method relating to the present invention, even if no particular operation is carried out at the terminal device, the order receiving device can successively display a large number of images on the terminal device. Thus, even if the number of products increases, a user can easily search for a desired product without the operational load on the user increasing.

In accordance with the ordering device and ordering method relating to the present invention, a large number of product images can successively be displayed without operation being carried out. Thus, even if the number of products increases, a user can easily search for a desired product without the operational load on the user increasing.

## Claims

1. An order receiving device for receiving orders of at least one of selected products by a client from at least two of images on the display of a client machine comprising:
a memory which stores a plurality of product images to be transmitted to at least one of a plurality of client machines via the network, and control data which, at a time when at least two of the plurality of product images are displayed on said client machine, automatically repeats automatic deleting of a predetermined number of product images on said client machine, and displaying of new product images of a predetermined number equal to the number of deleted product images;
a transmitter which transmits the product images and the control data stored in the memory; and
an order receiver which receives orders for products corresponding to the product images.

2. An order receiving device according to claim 1, wherein the memory stores control data which, at a time when at least two product images are displayed so as to be aligned in a predetermined direction, automatically repeats deleting of a predetermined number of product images at one end in the predetermined direction, and shifting, in a direction of deletion, and displaying of remaining product images by a number equal to the number of deleted product images, and displaying of new product images of the predetermined number at the other end in the predetermined direction.

3. An order receiving device according to claim 1 or claim 2, further comprising:
a category information receiver which receives category information which classifies products,
wherein the transmitter transmits product images belonging to category information received at the category information receiver, and control data for displaying the product images.

4. An order receiving method for receiving orders of at least one of selected products by a client from at least two of images on the display of a client machine comprising the steps of:
transmitting a plurality of product images to be transmitted to at least one of a plurality of client machines via the network, and control data which, at a time when at least two of the plurality of product images are displayed on said client machine, automatically repeats automatic deleting of a predetermined number of product images on said client machine, and displaying of new product images of a predetermined number equal to the number of deleted product images; and
receiving orders for products corresponding to the product images.

5. An order receiving method according to claim 4, wherein in the step of transmitting, control data is transmitted which, at a time when at least two product images are displayed so as to be aligned in a predetermined direction, automatically repeats deleting of a predetermined number of product images at one end in the predetermined direction, and shifting, in a direction of deletion, and displaying of remaining product images by a number equal to the number of deleted product images, and displaying of new product images of the predetermined number at the other end in the predetermined direction.

6. An order receiving method according to claim 4 or claim 5, further comprising the step of:
receiving category information which classifies products,
wherein, in the step of transmitting, product images belonging to category information received in the step of receiving category information, and control data for displaying the product images are transmitted.
